Europäisches Patentamt

(19) European Patent Office

Office européen des brevets

(11) Publication number: **0 073 822**
**B1**

(12) **EUROPEAN PATENT SPECIFICATION**

(45) Date of publication of patent specification: **17.01.90**

(21) Application number: **82901218.6**

(22) Date of filing: **08.03.82**

(86) International application number:
**PCT/US82/00282**

(87) International publication number:
**WO 82/03146 16.09.82 Gazette 82/22**

(51) Int. Cl.⁵: **H 04 N 5/217, H 04 N 5/335, H 04 N 5/228**

(54) **ERROR CORRECTION ARRANGEMENT FOR IMAGERS.**

(30) Priority: **10.03.81 US 242268**

(43) Date of publication of application:
**16.03.83 Bulletin 83/11**

(45) Publication of the grant of the patent:
**17.01.90 Bulletin 90/03**

(84) Designated Contracting States:
**DE FR GB**

(56) References cited:
**JP-A-5 456 722**
**JP-A-5 596 766**
**JP-A-54 124 627**
**US-A-3 856 989**
**US-A-3 904 818**
**US-A-4 038 690**
**US-A-4 145 721**
**US-A-4 220 971**
**US-A-4 237 488**

(73) Proprietor: **GENERAL ELECTRIC COMPANY**
**1, River Road**
**Schenectady NY 12345 (US)**

(72) Inventor: **MEISE, William Harry**
**Box 138 Route 413**
**Wrightstown, PA 18940 (US)**
Inventor: **DISCHERT, Robert Adams**
**16 Bloomer Drive**
**Burlington, NJ 08106 (US)**

(74) Representative: **Smith, Thomas Ian Macdonald et al**
**London Patent Operation G.E. Technical Services Co. Inc. Burdett House 15-16 Buckingham Street**
**London WC2N 6DU (GB)**

Courier Press, Leamington Spa, England.

## Description

The present invention relates to imagers having discrete photosensors. More particularly this invention relates to an imaging method and apparatus using such imagers where there may be defective photosensors.

Present CCD (charge coupled device) imagers suffer from low yields due to imperfections and defects in the integrated circuit chips from which they are fabricated. Various schemes have been used to correct for the signal disturbances that result from such defects. For example U.S. Patent US-A-3,904,818 shows a system that in effect does dropout compensation. The system detects when a photosensor provides excessive dark current, and if so, substitutes a signal that is the average of signals provided by photosensors surrounding the defective one. However, an average of signals from surrounding photosensors may not be a close enough approximation to be satisfactory. Other photosensors in the area may also be affected by the defect and averaging may not produce an acceptable correction. Other schemes use a ROM (read only memory) programmed with correction factors for the signal from each photosensor. However, if a particular photosensor is totally defective, the signal therefrom cannot be corrected.

It is known from JP-A-54-56722 to provide a system with two CCD imagers, one providing a luminance signal and the other providing three colour signals. The colour signals are combined with the luminance signal to provide colour difference signals, which are encoded with the luminance signal to provide a conventional television signal. Additionally, the three colour signals from the colour signal imager are matrixed together to provide an alternative luminance signal. Normally, the luminance signal from the luminance imager is passed to the further processing stages. However, when a defective signal portion is detected in the signal from the luminance imager, the alternative luminance signal matrixed from the colour signals is passed to the further processing stages in substitution for the luminance signal from the luminance imager.

According to the present invention, there is provided imaging apparatus and a method for generating a video signal as set out in the claims.

Embodiments of the present invention, given by way of non-limitative example, will now be described with reference to the accompanying drawings, in which:

FIGURE 1 is a block diagram of a first embodiment of the invention; and

FIGURE 2 is a block diagram of a second embodiment of the invention.

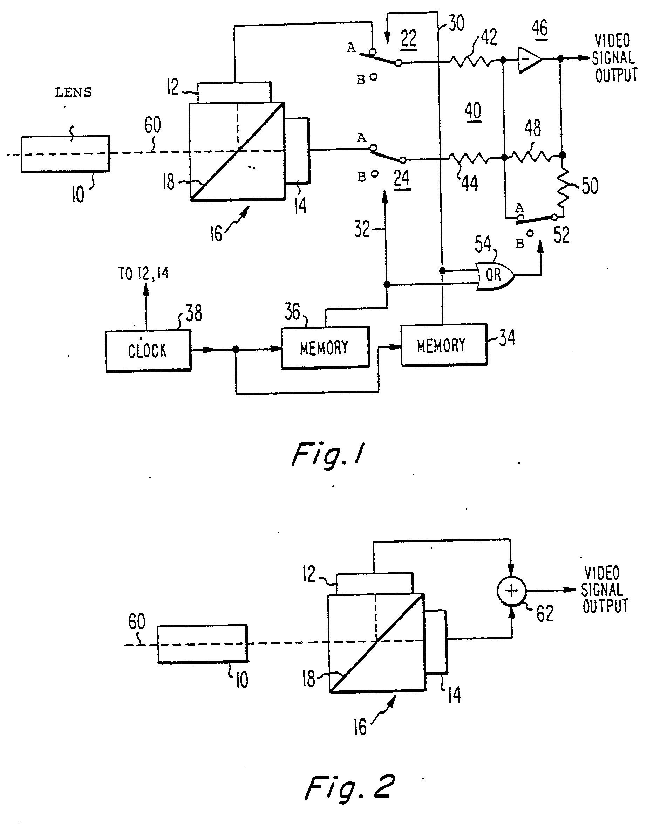

Referring to the drawings, FIGURE 1 shows a block diagram of the invention wherein light 60 from a scene being viewed passes through a lens 10 into a prism arrangement 16. Arrangement 16 comprises two contiguous triangular cross-section prisms with a semi-reflecting half-silvered mirror 18 disposed therebetween. Imagers 12 and 14 comprise discrete photosensors and mechanisms for scanning the photosensors to produce a signal representative of the light incident thereon, as in CCDs or photodiode arrays, for example. In accordance with one aspect of the invention, they need not be defect free and therefore are inexpensive. The imagers 12 and 14 are bonded in registration to two perpendicular sides of the arrangement 18 and at 45 degree angles with respect to the mirror 18. Thus half the light 60 is applied to each of the imagers 12 and 14. The lens 10 is designed and spaced from the arrangement 18 so that light from the scene will be in focus in the plane of the photosensors (not shown) of the imagers 12 and 14. An arrangement for bonding photosensor array to a prism with the imagers in registration is described in US-A-4323918 (equivalent to DE-A-3133546.2), inventor S.L. Bendell.

A clock generator 38 synchronously causes scanning to take place within the imagers 12 and 14 so that both imagers are simultaneously providing a signal from corresponding photosensors. Most of the time there will be good signals from both imagers 12 and 14, and therefore it is desired to add the signals from the two imagers together for improved signal-to-noise ratio. To achieve this, the signals from the imagers 12 and 14 are applied to switches 22 and 24 respectively. The switches, the positions of which are independently controlled by the signals on conductors 30 and 32 respectively, are normally in position A as shown. The output signals from the switches 22 and 24 are applied to an adder 40 including resistors 42 and 44. The output of the adder 40 is coupled to an inverting amplifier 46. Resistors 48 and 50 normally both provide negative feedback for the amplifier 46 due to a switch 52 which is in position A as shown. The position of the switch 52 is controlled by the output of an OR gate 54. A video output signal is derived from the output of the amplifier 46.

Memories 34 and 36 are programmed with the locations of defective photosensors of the imagers 12 and 14 respectively. For example, the memorys could be a ROM, which is preprogrammed with the locations of defective photosensors of the particular imager. (See U.S. Patent 4,237,488.) These memories are driven synchronously with the imagers by the clock generator 38. When the memory 34 indicates that a defective photosensor of the imager 12 is being read out, it provides a signal on the conductor 30 that switches the switch 22 to position B (an open terminal) so that no signal from the imager 12 is provided to the adder 40. Simultaneously therewith, the signal on the conductor 30 is passed by the OR gate 54 to the switch 52 to switch it to position B (an open terminal). Thus only the resistor 48 provides the negative feedback, which feedback is thereby reduced, increasing the gain. By proper selection of the resistors 48 and 50, the gain will increase by a factor of two to maintain peak video signal levels.

Similarly, when the memory 36 indicates that a defective photosensor is being read out from the imager 14, a signal is applied to the conductor 32 to the switch 24 to switch it to position B (an open terminal), thereby preventing the signal from being applied to the adder 40. Further, the signal on the conductor 32 is applied to the OR gate 54 to achieve the gain increase as explained above. Thus at least one imager will always supply a signal to the adder 40, provided that the defects do not coincide, which is normally rare. Thus, in the embodiment of FIGURE 1 when neither photosensor is defective, the signals are additively combined. If one of the photosensors is defective, only the signal from the other photosensor is used, and the gain of the system is doubled so that the peak signal level is maintained constant.

In the above discussion it has been assumed that the defective photosensors of the imagers 12 and 14 do not coincide. However, repetitive defects on a die arising from systematic errors, such as mask defects, could produce CCD imagers with systematic defects (defects all in the same location). In accordance with another aspect of the invention, one of each pair of the imagers 12 and 14 with systematic defects is mounted upside-down relative to the other. This imager is then scanned backwards to eliminate the systematic nature of the defects, making them appear random so as not to occur at the same location.

If the half-silvered mirror 18 divides the light 60 by other than one half, one imager receives more light than the other and the signal from one will be larger than from the other. This may be corrected by changing the values of the summing resistors 42 and 44 to correspond to the differing outputs.

A second embodiment of the invention is shown in FIGURE 2, wherein corresponding reference numbers are applied to corresponding elements. In this embodiment, the output signals from the imagers 12 and 14 are applied to an adder 62 and summed together. At least one photosensor of a pair of corresponding photosensors will provide an output signal, assuming that the defects do not coincide. At each location at which a photosensor of an imager is defective, the signal from the defective imager is averaged with the signal from the corresponding good photosensor of the second imager, thereby reducing the magnitude of the error. Again one of the imagers can be mounted upside down, and scanned backwards, if there are systematic defects.

Other embodiments of the invention will be apparent to those skilled in the art. For example, the imagers may be mounted by means other than bonding to the faces of prisms, and any number of imagers may be used, rather than the two shown. For color operation, an arrangement such as that shown may be used to respond to one or more of the primary colors.

Further, in a color camera, two or more (preferably three) imagers can be used, each imager being responsive to a different spectral distribution. Therefore if there is a defect in one imager, a signal from a defect-free imager can be combined with the signal from the defective photosensor. In particular, the imagers can be responsive to complementary colors, such as magenta, cyan, and yellow, which makes each imager responsive to two primary-colors, thereby making the signal combining process more effective.

## Claims

1. Imaging apparatus for generating a video signal representative of a scene, comprising: a plurality of imagers (12, 14) having a plurality of discrete photosensors, said photosensors being subject to defects and scanning means for obtaining corresponding scene information signals from said photosensors, said signals being subject to portions which are not representative of said scene due to said defects; characterized by means (40, 62) for adding the signal amplitude of said corresponding signals to produce said video signal.

2. An imaging apparatus according to Claim 1, in which the imagers (12, 14) or their scanning means are arranged such that at least one of the signal amplitude inputs to said adding means (40, 62) is not from a defective photosensor.

3. An imaging apparatus according to Claim 2, in which said scanning means scans said photosensors of one of said imagers backwards relative to said photosensors of another said imager.

4. An imaging apparatus according to any one of Claims 1 to 3 in which, when a said signal from one of said imagers (12, 14) contains a said non-representative portion, said adding means (62) receives and adds said non-representative signal portion and a signal portion from another imager.

5. An imaging apparatus according to any one of Claims 1 to 3 in which, said adding means (40) further includes means (22, 24, 30, 32, 34, 36, 38) responsive to the scanning of a defective photosensor for disconnecting said non-representative portion of said signal from said adding means.

6. An imaging apparatus according to Claim 5 in which said disconnecting means comprises a plurality of memories (34, 36) for respectively storing locations of said defective photosensors in said plurality of imagers; and switch means (22, 24) respectively coupled to said plurality of memories and imagers.

7. An imaging apparatus according to Claim 5 or Claim 6 in which said adding means (40) further comprises an amplifier (46) and means (48, 50, 52, 54) for changing the amplification of said amplifier when said non-representative portion of said signal is disconnected from said adding means.

8. An imaging apparatus according to any one of claims 5 to 7 in which said amplification changing means comprises means for changing the amount of negative feedback applied to said amplifier.

9. An imaging apparatus according to Claim 6, in which said plurality of imagers, plurality of memories, and switch means are all two in number.

10. A method for generating a video signal representative of light from a scene comprising steps of:

a) imaging a scene onto a plurality of imagers having a plurality of discrete photosensors; said photosensors being subject to defects;

b) scanning said photosensors of said imagers to obtain corresponding scene portion signals from said imagers, said signals being subject to portions which are not representative of the scene due to said defects,

characterized by

c) adding the amplitude of said signals to produce said video signal.

11. A method according to Claim 10 in which said step b) comprises scanning the photosensors of one of said imagers backwards relative to said remaining imagers.

12. A method according to Claim 10 or Claim 11 in which said step c) comprises adding said non-representative signal portion and a signal portion from another imager.

13. A method according to Claim 10 or Claim 11 in which said step c) further comprises preventing said non-representative portion of said signal from being added.

14. A method according to Claim 13 in which said step c) further comprises changing the degree of amplification of said video signal when preventing said non-representative portion of said signal from being added.

**Patentansprüche**

1. Bildsignalerzeugungsgerät zum Erzeugen eines eine Szene darstellenden Videosignals, mit einer Mehrzahl von Bildsignalerzeugern (12, 14), die eine Vielzahl diskreter Fotofühler aufweisen, welche zu Fehlern neigen, und mit einer Abtasteinrichtung zur Gewinnung entsprechender Szeneninformationssignale aus den Fotofühlern, wobei diese Signale Teile enthalten können, die infolge der besagten Fehler nicht darstellend für die Szene sind, gekennzeichnet durch eine Einrichtung (40, 62) zum Addieren der Signalamplitude der besagten entsprechenden Signale, um das Videosignal zu erzeugen.

2. Bildsignalerzeugungsgerät nach Anspruch 1, worin die Bildsignalerzeuger (12, 14) oder ihre Abtasteinrichtung so angeordnet sind, daß von den der Addiereinrichtung (40, 62) eingangsseitig zugeführten Signalamplituden mindestens eine nicht von einem fehlerhaften Fotofühler stammt.

3. Bildsignalerzeugungsgerät nach Anspruch 2, worin die Abtasteinrichtung die Fotofühler eines der Bildsignalerzeuger rückwärts gegenüber den Fotofühlern eines anderen der Bildsignalerzeuger abtastet.

4. Bildsignalerzeugungsgerät nach einem der Ansprüche 1 bis 3, worin, wenn das besagte Signal von einem der Bildsignalerzeuger (12, 14) einen nicht-darstellenden Teil enthält, die Addiereinrichtung (62) diesen nicht-darstellenden Signalteil und einen Signalteil von einem anderen Bildsignalerzeuger empfängt.

5. Bildsignalerzeugungsgerät nach einem der Ansprüche 1 bis 3, worin die Addiereinrichtung (40) ferner eine Einrichtung (22, 24, 30, 32, 34, 36, 38) enthält, die auf das Abtasten eines fehlerhaften Fotofühlers hin anspricht, um den besagten nicht-darstellenden Teil des Signals von der Addiereinrichtung abzukoppeln.

6. Bildsignalerzeugungsgerät nach Anspruch 5, worin die abkoppelnde Einrichtung eine Mehrzahl von Speichern (34, 36) aufweist, um jeweils Orte von in der Mehrzahl der Bildsignalerzeuger vorhandenen fehlerhaften Fotofühlern zu speichern, und worin mit der Mehrzahl der Speicher und der Bildsignalerzeuger jeweils eine Schalteinrichtung (22, 24) gekoppelt ist.

7. Bildsignalerzeugungsgerät nach Anspruch 5 oder Anspruch 6, worin die Addiereinrichtung (40) ferner einen Verstärker (46) und eine Einrichtung (48, 50, 52, 54) aufweist, um die Verstärkung des Verstärkers zu ändern, wenn der besagte nicht-darstellende Teil des Signals von der Addiereinrichtung abgekoppelt wird.

8. Bildsignalerzeugungsgerät nach einem der Ansprüche 5 bis 7, worin die Verstärkungsänderungseinrichtung eine Einrichtung aufweist, um das Maß negativer Rückkopplung am Verstärker zu ändern.

9. Bildsignalerzeugungsgerät nach Anspruch 6, worin die Mehrzahl der Bildsignalerzeuger, die Mehrzahl der Speicher und die Schalteinrichtungen jeweils in der Anzahl Zwei vorhanden sind.

10. Verfahren zum Erzeugen eines Licht aus einer Szene darstellenden Videosignals, bestehend aus den Schritten:

a) Abbilden einer Szene auf eine Mehrzahl von Bildsignalerzeugern, die eine Vielzahl diskreter Fotofühler aufweisen, welche anfällig für Fehler sind;

b) Abtasten der Fotofühler der besagten Bildsignalerzeuger, um aus diesen Bildsignalerzeugern entsprechende Szenenteilsignale zu erhalten, die Teile haben können, welche infolge der besagten Fehler nicht darstellend für die Szene sind, gekennzeichnet durch

c) Addieren der Amplitude der besagten Signale, um das Videosignal zu erzeugen.

11. Verfahren nach Anspruch 10, bei welchem beim Schritt b) die Fotofühler eines der Bildsignalerzeuger rückwärts gegenüber den übrigen Bildsignalerzeugern abgetastet werden.

12. Verfahren nach Anspruch 10 oder Anspruch 11, bei welchem beim Schritt c) der besagte nicht-darstellende Signalteil und ein Signalteil aus einem anderen Bildsignalerzeuger addiert werden.

13. Verfahren nach Anspruch 10 oder Anspruch 11, bei welchem beim Schritt c) ferner verhindert wird, daß der besagte nicht-darstellende Teil der Signale addiert wird.

14. Verfahren nach Anspruch 13, bei welchem beim Schritt c) ferner der Grad der Verstärkung des Videosignals geändert wird, wenn das Addieren des nicht-darstellenden Teils des Signals verhindert wird.

## Revendications

1. Dispositif de mise en image pour produire un signal vidéo représentatif d'une scène, comprenant: une pluralité d'imageurs (12, 14) ayant une pluralité de photodétecteurs distincts, les photodétecteurs étant sujets à des défauts et un moyen de balayage pour obtenir des signaux d'information d'une scène correspondants desdits photodétecteurs, lesdits signaux étant sujets à des portions qui ne sont pas représentatives de ladite scène à cause desdits défauts; caractérisé par un moyen (40, 62) pour additionner l'amplitude de signal desdits signaux correspondants pour produire ledit signal vidéo.

2. Dispositif de mise en image selon la revendication 1, dans lequel les imageurs (12, 14) ou leurs moyens de balayage sont agencés de façon qu'au moins l'une des amplitudes de signal transmis au moyen additionneur précité (40, 62) ne provienne pas d'un photodétecteur défectueux.

3. Dispositif de mise en image selon la revendication 2, dans lequel le moyen de balayage précité balaye lesdits photodétecteurs de l'un desdits imageurs en arrière par rapport auxdits photodétecteurs de l'autre imageur.

4. Dispositif de mise en image selon l'une des revendications 1 à 3 dans lequel, lorsqu'un signal précité de l'un des imageurs précités (12, 14) contient une portion non représentative précitée, le moyen additionneur précité (62) reçoit et additionne la portion de signal non représentative précitée et une portion de signal de l'autre imageur.

5. Dispositif de mise en image selon l'une des revendications 1 à 3, dans lequel le moyen additionneur précité (40) comprend de plus un moyen (22, 24, 30, 32, 34, 36, 38) répondant au balayage d'un photodétecteur défectueux pour déconnecter la portion non représentative précitée du signal précité dudit moyen additionneur.

6. Dispositif de mise en image selon la revendication 5, dans lequel le moyen de déconnection précité comprend une pluralité de mémoires (34, 36) pour stocker respectivement les emplacements des photodétecteurs défectueux dans la pluralité précitée d'imageurs; et des moyens commutateurs (22, 24) couplés respectivement à la pluralité de mémoires et aux imageurs.

7. Dispositif de mise en image selon la revendication 5 ou la revendication 6, dans lequel le moyen additionneur précité (40) comprend de plus un amplificateur (46) et un moyen (48, 50, 52, 54) pour changer l'amplification dudit amplificateur lorsque la portion non représentative précitée du signal précité est déconnectée dudit moyen additionneur.

8. Dispositif de mise en image selon l'une des revendications 5 à 7, dans lequel le moyen de changement d'amplification précité comprend un moyen pour changer la quantité de contre-réaction négative appliquée à l'amplificateur précité.

9. Dispositif de mise en image selon la revendication 6, dans lequel la pluralité précitée d'imageurs, la pluralité de mémoires, et les moyens commutateurs sont tous au nombre de deux.

10. Un procédé pour produire un signal vidéo représentatif de la lumière d'une scène comprenant les étapes de:
a) mettre en image une scène sur une pluralité d'imageurs ayant une pluralité de photodétecteurs distincts; lesdits photodétecteurs étant sujets à des défauts;
b) balayer lesdits photodétecteurs dedits imageurs pour obtenir des signaux de portion de scène correspondants à partir desdits imageurs, lesdits signaux étant sujets à des portions qui sont non représentatives de la scène à cause desdits défauts,
caractérisé par
c) l'addition de l'amplitude desdits signaux pour produire ledit signal vidéo.

11. Un procédé selon la revendication 10, dans lequel l'étape précitée b) comprend le balayage des photodétecteurs de l'un des imageurs précités en arrière par rapport aux imageurs restants précités.

12. Un procédé selon la revendication 10 ou la revendication 11, dans lequel l'étape précitée c) comprend l'addition de la portion précitée du signal non représentative et d'une portion de signal d'un autre imageur.

13. Un procédé selon la revendication 10 ou la revendication 11, dans lequel l'étape précitée c) comprend de plus d'empêcher la portion non représentative précitée du signal précité d'être additionnée.

14. Un procédé selon la revendication 13, dans lequel l'étape précitée c) comprend de plus de changer de degré d'amplification du signal vidéo précité lorsqu'on empêche la portion non représentative précitée du signal précité d'être additionnée.

*Fig. 1*

*Fig. 2*